# EUROPÄISCHE PATENTSCHRIFT

(11) **EP 3 577 358 B1**
(45) Veröffentlichungstag und Bekanntmachung des Hinweises auf die Patenterteilung: **29.04.2020**
(21) Anmeldenummer: 17829180.3
(22) Anmeldetag: 19.12.2017
(51) Int. Cl.: F16C 33/04, F16C 17/02, F03B 3/18, F03B 11/06

(54) **LEITSCHAUFELLAGER UND VERFAHREN ZUR WARTUNG**
GUIDE VANE BEARING AND MAINTENANCE METHOD
PALIER D'AUBE DIRECTRICE ET PROCÉDÉ POUR LA MAINTENANCE

(30) Priorität: 02.02.2017 DE 102017102033
(43) Veröffentlichungstag der Anmeldung: 11.12.2019
(73) Patentinhaber: Voith Patent GmbH, 89522 Heidenheim (DE)
(72) Erfinder: SCHABASSER, Martin, 3123 Pfaffing (AT); POPELKA, Thomas, 3390 Melk (AT)
(74) Vertreter: Voith Patent GmbH - Patentabteilung
(86) Internationale Anmeldenummer: PCT/EP2017/083427
(87) Internationale Veröffentlichungsnummer: WO 2018/141456

(56) Entgegenhaltungen:
- EP-A1- 2 993 365
- CH-A- 277 775
- GB-A- 2 509 365
- JP-U- S6 010 885

## Beschreibung

Die vorliegende Erfindung betrifft ein Leitschaufellager für eine hydraulische Maschine und ein Verfahren zum Ein- bzw. Ausbau eines solchen Lagers.

Zur Regelung des Durchflusses können hydraulische Maschinen, wie Turbinen, Pumpen oder Pumpturbinen, über einen Leitapparat verfügen, welcher eine Vielzahl von beweglichen Leitschaufeln umfasst. Die beweglichen Leitschaufeln erstrecken sich dabei zwischen zwei Ringen und werden in diesen durch die Leitschaufellager beweglich gelagert. Einer der Ringe umfasst die Mittel zur Betätigung der Leitschaufeln, d.h. die Mittel mit denen diese um ihre Achse gedreht werden können. Dieser Ring wird gewöhnlich der Regulier- oder Regelring genannt. Der dem Regelring gegenüber liegende Ring wird Bottomring genannt, weil sich dieser Ring bei den hydraulischen Maschinen mit vertikaler Drehachse unten befindet. Die vorliegende Erfindung bezieht sich auf die Leitschaufellager im Bottomring. Es sei jedoch gesagt, dass die vorliegende Erfindung nicht auf hydraulische Maschinen mit vertikaler Drehachse beschränkt sein soll. Der Begriff Bottomring (= der dem Regelring gegenüber liegende Ring) wird nur verwendet, um umständliche Formulierungen zu vermeiden. Es ist klar, dass es sich bei den gattungsgemäßen Leitschaufellagern um Radiallager handelt.

Zum Ein- und Ausbau z.B. zu Wartungszwecken von Leitschaufellagern im Bottomring muss entweder die Zugänglichkeit von außerhalb des Wasserweges gegeben sein oder die betreffende Leitschaufel muss aus dem Leitschaufellager gezogen werden, was in der Regel nur möglich ist, wenn der Deckel der hydraulischen Maschine demontiert wird. Die erste Möglichkeit erfordert viel Platz, so dass die hydraulische Maschine entsprechend groß baut, und die zweite Möglichkeit bedeutet einen großen Aufwand bei einer Wartung der Lager. Die Aufgabe der vorliegenden Erfindung besteht darin, ein Leitschaufellager für einen Bottomring und ein Verfahren zum Ein- und Ausbau desselben anzugeben, das weder die Zugänglichkeit von außerhalb des Wasserweges noch die Demontage des Deckels der hydraulischen Maschine zum Ein- und Ausbau des Lagers erfordert. Durch die Verwendung solcher Lager können neue hydraulische Maschinen kompakter, gebaut werden, wobei der zukünftige Wartungsaufwand bei Lagerverschleiß keine Demontage des Deckels der hydraulischen Maschine erfordert. Die Lager der vorliegenden Erfindung können von der Wasserseite ein- und ausgebaut werden.

Aus der CH 277775 sind bereits ein gattungsgemäßes Leitschaufellager und ein Verfahren zum Ein- und Ausbau desselben bekannt. Die bekannte Lösung erfordert jedoch große Hohlräume im Bottomring und eine aufwändige Vorrichtung zur Montage der Lager. Außerdem ist eine zusätzliche Öffnung im Bottomring erforderlich, die mit einem Deckel verschlossen werden muss. Die vorliegende Erfindung benötigt einen wesentlich kleineren Hohlraum im Bottomring und keinerlei besondere Vorrichtungen zur Montage der Lager. Auch die Öffnung im Bottomring entfällt. Die erfindungsgemäße Lösung ist daher kostengünstiger und kompakter als die bekannte Lösung, und das erfindungsgemäße Verfahren zum Ein- und Ausbau ist einfacher auszuführen als das bekannte Verfahren.

Erfindungsgemäß wird diese Aufgabe durch ein Leitschaufellager mit den Merkmalen des unabhängigen Anspruchs 1 und durch den unabhängigen Verfahrensanspruch gelöst. Weitere vorteilhafte Ausgestaltungen des erfindungsgemäßen Leitschaufellagers ergeben sich aus den abhängigen Unteransprüchen.

Die Erfinder haben sich von dem Gedanken leiten lassen, das Leitschaufellager segmentiert auszuführen.

Die erfindungsgemäße Lösung wird nachfolgend anhand von Figuren erläutert. Darin ist im Einzelnen folgendes dargestellt:
- Figur 1: Erfindungsgemäßes Leitschaufellage in einem Schnitt quer zur Lagerachse in Einbauposition;
- Figur 2: Erfindungsgemäßes Leitschaufellage in Seitenansicht;
- Figur 3: Erfindungsgemäßes Leitschaufellage in einem Schnitt entlang der Lagerachse;
- Figur 4: Ablaufschema des erfindungsgemäßen Verfahrens zum Ausund Einbau des erfindungsgemäßen Leitschaufellagers.

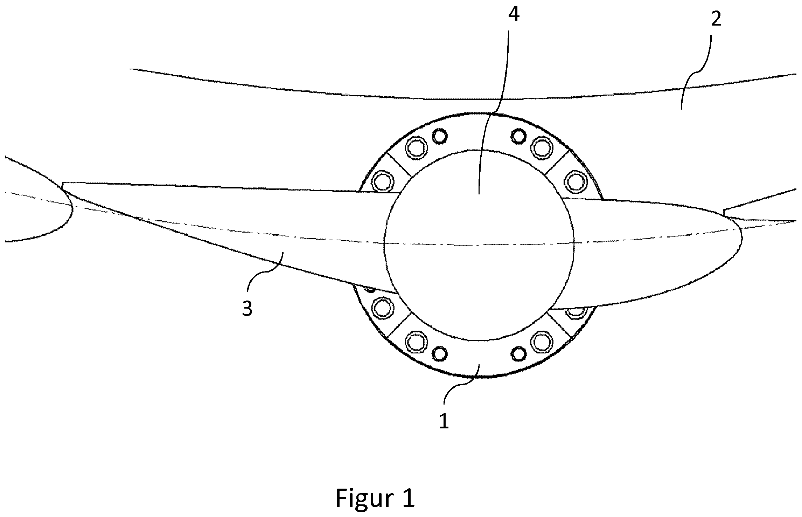

Figur 1 zeigt ein erfindungsgemäßes Leitschaufellager in Einbauposition in Draufsicht. Das Leitschaufellager ist mit 1 und der Bottomring mit 2 bezeichnet. Ferner zeigt Figur 1 eine im Lager 1 gelagerte Leitschaufel umfassend ein Leitschaufelblatt, das mit 3 bezeichnet ist, und einen Leitschaufelzapfen, der mit 4 bezeichnet ist. Aus Figur 1 ist ersichtlich, dass das Lager 1 aus vier Segmenten besteht. Bei sehr dünnen Leitschaufelblättern 3 ist es denkbar, dass ein erfindungsgemäßes Leitschaufellager 1 auch nur aus drei Segmenten bestehen kann. In der Regel werden aber vier Segmente benötigt, um eine Wartung des Lagers von der Wasserseite her zu ermöglichen. Eine weitere Erhöhung der Segmentanzahl ist im Prinzip denkbar, aber aus wirtschaftlichen Gründen nicht vorteilhaft. Die Lagersegmente weisen Öffnungen zur Verschaubung der Segmente am Bottomring 2 auf. Außerdem sind weitere Öffnungen zum Abdrücken des Lagers an den Segmenten vorgesehen.

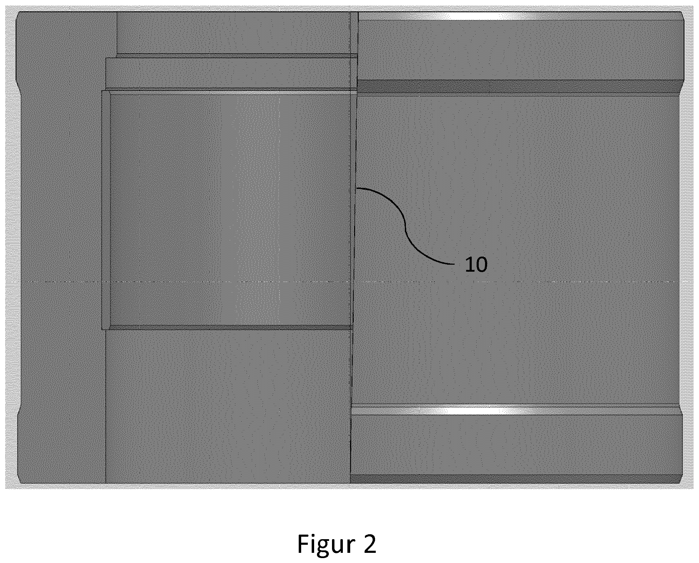

Figur 2 zeigt ein erfindungsgemäßes Leitschaufellager in Seitenansicht. Dabei ist das links vorne gelegene Lagersegment nicht dargestellt. Die Teilfuge zwischen dem nicht dargestellten Segment und dem Segment rechts vorne ist mit 10 bezeichnet. Man kann erkennen, dass die Teilfuge 10 relativ zur Lagerachse leicht schräg verläuft. Dadurch ist das nicht dargestellte Segment am wasserseitigen Rand (oberen in Figur 2) in Umfangsrichtung breiter als am gegenüberliegenden Rand (unten in Figur 2). Vorausgesetzt ist dabei, dass die anderen Teilfugen parallel zur Lagerachse verlaufen. Durch diese leicht keilförmige Ausbildung in der beschriebenen Orientierung kann dieses Segment leicht als erstes Segment in Richtung des Wasserweges ausgebaut bzw. als letztes Segment eingebaut werden (siehe unten). Im Rahmen der vorliegenden Erfindung wird dieses Segment kurz als "keilförmiges Segment" bezeichnet. Im Prinzip könnte auch die andere Teilfuge dieses Segments schräg gestellt sein, so dass sich die Keilform auf beide Teilfugen verteilt. Da aber eine schräge Teilfuge aufwändiger zu fertigen ist, und die Schrägstellung einer Teilfuge völlig ausreichend ist, ist es vorteilhaft, dass nur eine Teilfuge des Lagers schräg ausgebildet ist.

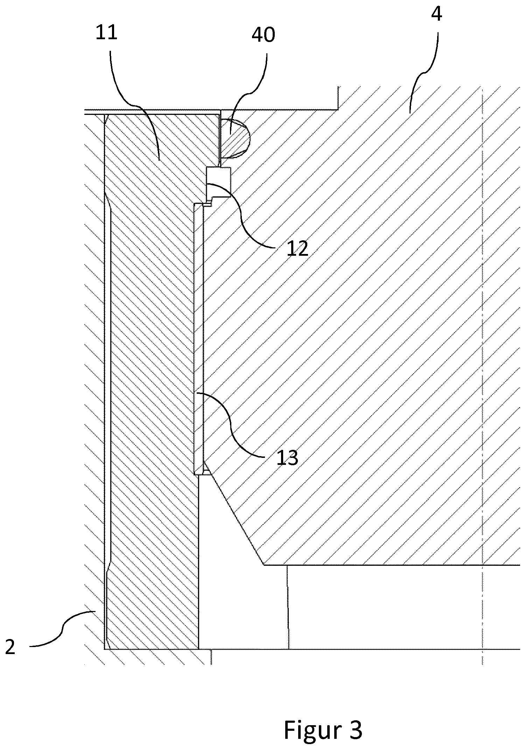

Figur 3 zeigt einen Teil eines eingebauten erfindungsgemäßen Leitschaufellagers in einem Schnitt entlang der Lagerachse. Der Bottomring ist dabei wieder mit 2 und der Zapfen der Leitschaufel mit 4 bezeichnet. Das Lager umfasst einen sogenannten Lagerträger, welcher mit 11 bezeichnet ist. Eine Schicht Lagermaterial, welche mit 13 bezeichnet ist, ist am Lagerträger 11 befestigt und befindet sich in Einbauposition zwischen dem Zapfen 4 und dem Lagerträger 11. Die Schicht Lagermaterial 13 ist am Lagerträger 11 entweder mit radial verlaufenden Schrauben befestigt oder angeklebt. Dabei umfasst jedes Segment des Lagers einen Teil des Lagerträgers 11 und einen Teil der Lagermaterialschicht 13. Der Zapfen 4 weist ferner eine Entlastungsnut auf, welche mit 40 bezeichnet ist. Um das Wasser am Eindringen in das Lager zu verhindern, umfasst das erfindungsgemäße Lager auch eine Lagerdichtung. Diese ist in Figur 3 nicht dargestellt. Die Lagerdichtung ist in dem Hohlraum in der Nähe der Entlastungsnut 40 angeordnet. Dabei ist die Lagerdichtung fest am Zapfen 4 montiert und dreht sich mit der Leitschaufel mit, sodass die Dichtlippe über eine Fläche des Lagerträgers 11, welche mit 12 bezeichnet ist, gleitet. Die Fläche 12 ist die eigentliche Dichtfläche. Bei herkömmlichen Lagern ist es genau umgekehrt, d.h. die Dichtung ist fest mit dem Lagerkörper verbunden und die Dichtlippe gleitet an einer Fläche des Zapfens. Es ist klar, dass der Bottomring (2) zur Aufnahme der Lagersegmente und des Zapfens (4) eine entsprechend dimensionierte Öffnung aufweist. Zur Montage der Dichtung ist ein ausreichend großer freier Raum neben und unterhalb des Zapfens (4) erforderlich (siehe unten).

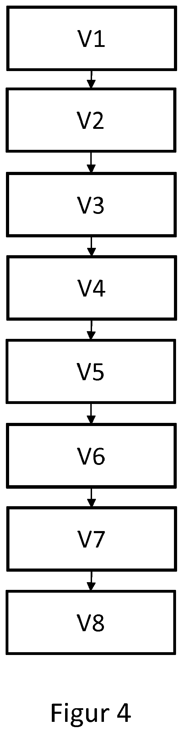

Figur 4 zeigt das Ablaufdiagramm des erfindungsgemäßen Verfahrens zum Aus- und Einbau eines erfindungsgemäßen Leitschaufellagers z.B. zur Wartung des Lagers. Alle Manipulationen erfolgen dabei von Seiten des Wasserweges her. Im mit V1 bezeichneten Verfahrensschritt werden die Schrauben, mit denen die Lagersegmente am Bottomring befestigt sind, gelöst. Dazu ist es nötig, die Leitschaufel zu verdrehen, sodass auch die abgedeckten Schrauben zugänglich sind (vgl. Figur 1). Die Schrauben können dabei entweder vollständig entfernt oder nur gelockert werden. Im letzteren Fall werden die Schrauben in V2 und V3 vollständig entfernt. In V2 wird das keilförmige Segment aus dem Bottomring herausgezogen. Dazu kann das keilförmige Segment spezielle Bohrungen haben, in die ein Abziehwerkzeug eingesetzt werden kann. Über diese Bohrungen oder andere Markierungen kann das keilförmige Segment identifiziert werden. Die Identifikation kann sich jedoch auch aus der Einbaulage der Segmente ergeben. In V3 werden die restlichen Segmente ausgebaut. Auch dabei wird ein Verdrehen der Leitschaufel hilfreich sein. In V4 wird die Dichtung demontiert. Dies kann zerstörend erfolgen oder analog zum Einbau der Dichtung (siehe unten V5). Damit ist das Lager ausgebaut. Bei einer Wartung würden nun z.B. die Lagermaterialschichten ersetzt werden und alle Teile gereinigt werden. Es folgen die Schritte zum Einbau des Lagers. In V5 wird die Dichtung eingebaut. Bei einer Wartung wäre dies eine neue Austauschdichtung. Dazu wird die Dichtung unterhalb des Zapfens durchgefädelt. Dazu ist ein Mindestmaß an Platz seitlich und auch unterhalb des Zapfens erforderlich. Dadurch bestimmen sich die Dimensionen der Lagersegmente hinsichtlich der radialen Ausdehnung als auch hinsichtlich der axialen Länge derselben und natürlich auch die Ausdehnung der Öffnung im Bottomring. Eine ausreichende radiale Ausdehnung der Lagersegmente ist auch aus Steifigkeitsgründen geboten. Zur Erleichterung des Durchfädelns der Dichtung kann diese vorgewärmt werden, sodass sie biegsam wird. Eine großzügige Anzugsfase am unteren Ende des Zapfens ist ebenfalls hilfreich. In V6 werden die in V3 ausgebauten Segmente eingebaut. Dabei können die zugehörigen Schrauben bereits eingesetzt werden, ohne jedoch fest angezogen zu werden. Auch hierbei wird ein Verdrehen der Leitschaufel hilfreich sein. In V7 wird das keilförmige Segment eingebaut. Durch die Keilform dieses Segments schließen sich beim Einschieben desselben die Zwischenräume zwischen den Segmenten. In V8 werden die Schrauben der Segmente fest angezogen. Auch hierbei wird ein Verdrehen der Leitschaufel hilfreich sein.

Beim Einbau der Lagersegmente kommt es zu einem Gleiten derselben auf Passflächen. Passflächen der Lagersegmente sind die Teilfugen, da diese im eingebauten Zustand spielfrei geschlossen sein müssen. Durch die Schrägstellung einer Teilfuge wird gerade beim am höchsten belasteten Einbau des letzten, d.h. des keilförmigen Lagersegments, ein langes Gleiten auf den Teilfugen dieses Segments vermieden. Außerdem wird dadurch natürlich der Ausbau der Segmente enorm erleichtert, insbesondere da zu erwarten ist, dass nach dem Betrieb der hydraulischen Maschine Verschmutzungen auftreten, die den Ausbau weiter erschweren. Auch die Flächen der Segmente die in der Einbaulage am Bottomring anliegen sind Passflächen. Um ein langes Gleiten auf diesen Passungen zu vermeiden, kann die Führung am Außendurchmesser des Lagers auf zwei kurze Teile aufgeteilt werden, d.h. der Lagerträger grenzt nur im Bereich seiner axialen Enden direkt an den Bottomring an (siehe Figur 2 und 3 - äquivalent könnte natürlich auch der Bottomring eine Aussparung haben und der Lagerträger zylindrisch ausgeführt sein). Als Material der Lagerträgersegmente wird zweckmäßigerweise rostfreies Material verwendet. An den Stoßstellen der Lauffläche der Dichtung (Fläche 12 in Figur 3) ist Sorge zu tragen, dass keine Kanten und Grate vorhanden sind, damit es zu keinem vorzeitigen Dichtungsversagen kommt. Ein Entgraten und leichtes Anfasen ist anzuraten. Beim Einbau der Lagersegmente ist ferner darauf zu achten, dass die Dichtlippe nicht verletzt wird. Dazu kann es vorteilhaft sein, dass der Lagerdurchmesser größer ist als der Dichtdurchmesser (vgl. Figur 3 - der an die Lagermaterialschicht 13 angrenzende Durchmesser des Zapfens 4 ist größer als der Innendurchmesser der Fläche 12, welche die Lauffläche für die Lippe der Lagerdichtung bildet).

Es kann von Vorteil sein, wenn das Lager mit einer Drainage ausgestattet ist. Da die Spalte zwischen den Segmenten nicht zusätzlich gedichtet werden, ist Leckage nicht auszuschließen.

Abschließend sei erwähnt, dass es im Sinne der Erfindung ist, wenn der Lagerträger und die Schicht Lagermaterial aus einem Stück gefertigt sind. D.h. das Lagermaterial ist integral im Lagerträger oder anders ausgedrückt: Der Lagerträger besteht vollständig aus Lagermaterial. Dabei muss das verwendete Material neben vernünftigen Gleiteigenschaften auch ausreichende Festigkeitseigenschaften aufweisen. Als geeignete Werkstoffe hierzu bieten sich entsprechende Kunststoffe an.

## Patentansprüche

1. Leitapparat für eine hydraulische Maschine, umfassend einen Regelring, einen Bottomring (2), eine Leitschaufel mit einem Zapfen (4) und ein Lager (1) zur radialen Lagerung des Zapfens (4) im Bottomring (2), welches von Seiten des Wasserweges der hydraulischen Maschine gewartet werden kann, wobei der Bottomring (2) eine Öffnung zur Aufnahme des Lagers (1) und des Zapfens (4) umfasst, und wobei das Lager (1) einen Lagerträger (11) und eine Schicht Lagermaterial (13) umfasst, wobei der Lagerträger (11) so ausgebildet ist, dass er mit dem Bottomring (2) verbunden werden kann, und die Schicht Lagermaterial (13) so ausgebildet ist, dass sie den Zapfen (4) umschließt, **dadurch gekennzeichnet, dass** das Lager (1) wenigstens drei Segmente umfasst, welche separat mit dem Bottomring (2) verbunden werden können, wobei jedes Segment einen Teil des Lagerträgers (11) und einen Teil der Schicht Lagermaterial (13) umfasst, und wobei eine Teilfuge (10) zwischen den Segmenten schräg bezüglich der Lagerachse ausgeführt ist, so dass ein Segment Keilform ausweist, wobei das keilförmige Segment am wasserseitigen Rand in Umfangsrichtung des Lagers (1) breiter ist als am gegenüberliegenden Rand, und wobei das Lager (1) eine Lagerdichtung umfasst und die Lagerdichtung drehstarr mit dem Zapfen (4) verbunden ist, und der Lagerträger (11) eine Fläche (12) aufweist, die als Lauffläche für die Lippe der Lagerdichtung ausgebildet ist, und wobei die Ausdehnung der Öffnung im Bottomring (2) so bemessen ist, dass die Lagerdichtung eingebaut werden kann, wenn die Segmente des Lagers (1) nicht mit dem Bottomring (2) verbunden sind und der Zapfen (4) sich in der Öffnung des Bottomrings (2) befindet.

2. Leitapparat nach Anspruch 1, wobei das Lager (1) genau vier Segmente umfasst, welche separat mit dem Bottomring (2) verbunden werden können.

3. Leitapparat nach Anspruch 1 oder 2, wobei der Durchmesser der Lauffläche für die Lippe der Lagerdichtung kleiner ist als der Innendurchmesser der Schicht aus Lagermaterial (13).

4. Leitapparat nach einem der Ansprüche 1 bis 3, wobei der Bottomring (2) und der Lagerträger (11) so ausgebildet sind, dass der Lagerträger (11) nur im Bereich seiner axialen Enden direkt an den Bottomring (2) angrenzt.

5. Leitapparat nach einem der Ansprüche 1 bis 4, wobei der Lagerträger (11) aus rostfreiem Material ausgeführt ist.

6. Leitapparat nach einem der Ansprüche 1 bis 5, wobei das Lager (1) eine Drainage umfasst.

7. Leitapparat nach einem der Ansprüche 1 bis 6, wobei der Zapfen (4) eine Anzugsfase am Ende aufweist.

8. Leitapparat nach einem der Ansprüche 1 bis 7, wobei der Lagerträger (11) aus Lagermaterial besteht.

9. Verfahren zum Aus- und Einbau eines Lagers (1) eines Leitapparates gemäß einem der vorangehenden Ansprüche umfassend die folgenden Schritte in der angegebenen Reihenfolge:
(V1) Lösen der Verbindungen zwischen den Segmenten des Lagers (1) und dem Bottomring (2);
(V2) Herausziehen des keilförmigen Segments aus der Öffnung des Bottomrings (2) in Richtung des Wasserweges;
(V3) Herausziehen der restlichen Segmente aus der Öffnung des Bottomrings (2) in Richtung des Wasserweges;
(V4) Ausbau der Lagerdichtung;
(V5) Einbau der Lagerdichtung;
(V6) Einführung der in V3 herausgezogenen Segmente in die Öffnung des Bottomrings (2) von Seiten des Wasserweges;
(V7) Einführung des keilförmigen Segments in die Öffnung des Bottomrings (2) von Seiten des Wasserweges;
(V8) Herstellen der Verbindungen zwischen den Segmenten des Lagers (1) und dem Bottomring (2).

## Claims

1. Guide apparatus for a hydraulic machine, comprising a regulation ring, a bottom ring (2), a guide vane having a journal (4), and a bearing (1) for the radial mounting of the journal (4) in the bottom ring (2), which bearing can be maintained from the side of the water path of the hydraulic machine, wherein the bottom ring (2) comprises an opening for receiving the bearing (1) and the journal (4), and wherein the bearing (1) comprises a bearing carrier (11) and a layer of bearing material (13), wherein the bearing carrier (11) is formed such that it can be connected to the bottom ring (2), and the layer of bearing material (13) is formed such that it surrounds the journal (4), **characterized in that** the bearing (1) comprises at least three segments which can be connected to the bottom ring (2) separately, wherein each segment comprises a part of the bearing carrier (11) and a part of the layer of bearing material (13), and wherein one parting joint (10) between the segments is formed in a manner oblique with respect to the bearing axis, with the result that one segment has a wedge shape, wherein the wedge-shaped segment, at the water-side boundary, is wider in a circumferential direction of the bearing (1) than at the opposite boundary, and wherein the bearing (1) comprises a bearing seal and the bearing seal is connected in a rotationally rigid manner to the journal (4), and the bearing carrier (11) has a surface (12) which is formed as a running surface for the lip of the bearing seal, and wherein the extent of the opening in the bottom ring (2) is of such a size that the bearing seal can be installed if the segments of the bearing (1) are not connected to the bottom ring (2) and the journal (4) is situated in the opening of the bottom ring (2) .

2. Guide apparatus according to Claim 1, wherein the bearing (1) comprises exactly four segments which can be connected to the bottom ring (2) separately.

3. Guide apparatus according to Claim 1 or 2, wherein the diameter of the running surface for the lip of the bearing seal is less than the inner diameter of the layer of bearing material (13).

4. Guide apparatus according to one of Claims 1 to 3, wherein the bottom ring (2) and the bearing carrier (11) are formed such that only in the region of its axial ends does the bearing carrier (11) directly adjoin the bottom ring (2).

5. Guide apparatus according to one of Claims 1 to 4, wherein the bearing carrier (11) is formed from rust-resistant material.

6. Guide apparatus according to one of Claims 1 to 5, wherein the bearing (1) comprises a drainage means.

7. Guide apparatus according to one of Claims 1 to 6, wherein the journal (4) has a tightening bevel at the end.

8. Guide apparatus according to one of Claims 1 to 7, wherein the bearing carrier (11) consists of bearing material.

9. Method for removing and installing a bearing (1) of a guide apparatus according to one of the preceding claims, comprising the following steps in the stated order:
(V1) releasing the connections between the segments of the bearing (1) and the bottom ring (2);
(V2) pulling the wedge-shaped segment out of the opening of the bottom ring (2) in the direction of the water path;
(V3) pulling the remaining segments out of the opening of the bottom ring (2) in the direction of the water path;
(V4) removing the bearing seal;
(V5) installing the bearing seal;
(V6) inserting the segments pulled out in V3 into the opening of the bottom ring (2) from the side of the water path;
(V7) inserting the wedge-shaped segment into the opening of the bottom ring (2) from the side of the water path;
(V8) establishing the connections between the segments of the bearing (1) and the bottom ring (2).

## Revendications

1. Appareil directeur pour une machine hydraulique, comprenant une bague de réglage, une bague inférieure (2), une aube directrice avec un tourillon (4) et un palier (1) pour le support radial du tourillon (4) dans la bague inférieure (2), qui peut être entretenu du côté de la voie d'eau de la machine hydraulique, la bague inférieure (2) comprenant une ouverture pour recevoir le palier (1) et le tourillon (4), et le palier (1) comprenant un support de palier (11) et une couche de matériau de palier (13), le support de palier (11) étant réalisé de manière à pouvoir être connecté à la bague inférieure (2), et la couche de matériau de palier (13) étant réalisée de telle sorte qu'elle entoure le tourillon (4), **caractérisé en ce que** le palier (1) comprend au moins trois segments qui peuvent être connectés séparément à la bague inférieure (2), chaque segment comprenant une partie du support de palier (11) et une partie de la couche de matériau de palier (13), et un joint partiel (10) étant réalisé entre les segments, obliquement par rapport à l'axe de palier, de telle sorte qu'un segment présente une forme en coin, le segment en forme de coin étant plus large au niveau du bord côté eau dans la direction périphérique du palier (1) qu'au niveau du bord opposé, et le palier (1) comprenant un joint d'étanchéité de palier et le joint d'étanchéité de palier étant connecté de manière rigide en rotation au tourillon (4) et le support de palier (11) présentant une surface (12) qui est réalisée en tant que surface de roulement pour la lèvre du joint d'étanchéité de palier, et l'étendue de l'ouverture dans la bague inférieure (2) étant mesurée de telle sorte que le joint d'étanchéité de palier puisse être incorporé, quand les segments du palier (1) ne sont pas connectés à la bague inférieure (2) et que le tourillon (4) se trouve dans l'ouverture de la bague inférieure (2).

2. Appareil directeur selon la revendication 1, dans lequel le palier (1) comprend exactement quatre segments qui peuvent être connectés séparément à la bague inférieure (2).

3. Appareil directeur selon la revendication 1 ou 2, dans lequel le diamètre de la surface de roulement pour la lèvre du joint d'étanchéité de palier est inférieur au diamètre intérieur de la couche de matériau de palier (13).

4. Appareil directeur selon l'une quelconque des revendications 1 à 3, dans lequel la bague inférieure (2) et le support de palier (11) sont réalisés de telle sorte que le support de palier (11) ne soit directement adjacent à la bague inférieure (2) que dans la région de ses extrémités axiales.

5. Appareil directeur selon l'une quelconque des revendications 1 à 4, dans lequel le support de palier (11) est réalisé en matériau inoxydable.

6. Appareil directeur selon l'une quelconque des revendications 1 à 5, dans lequel le palier (1) comprend un drainage.

7. Appareil directeur selon l'une quelconque des revendications 1 à 6, dans lequel le tourillon (4) présente un biseau de serrage à l'extrémité.

8. Appareil directeur selon l'une quelconque des revendications 1 à 7, dans lequel le support de palier (11) se compose de matériau de palier.

9. Procédé de montage et de démontage d'un palier (1) d'un appareil directeur selon l'une quelconque des revendications précédentes, comprenant les étapes suivantes, dans l'ordre indiqué :
(V1) desserrage des connexions entre les segments du palier (1) et la bague inférieure (2) ;
(V2) retrait du segment en forme de coin hors de l'ouverture de la bague inférieure (2) dans la direction de la voie d'eau ;
(V3) retrait du reste des segments hors de l'ouverture de la bague inférieure (2) dans la direction de la voie d'eau ;
(V4) démontage du joint d'étanchéité de palier ;
(V5) montage du joint d'étanchéité de palier ;
(V6) insertion des segments retirés dans V3 dans l'ouverture de la bague inférieure (2) depuis les côtés de la voie d'eau ;
(V7) introduction du segment en forme de coin dans l'ouverture de la bague inférieure (2) depuis les côtés de la voie d'eau ;
(V8) établissement des connexions entre les segments du palier (1) et la bague inférieure (2) .
